# EUROPEAN PATENT APPLICATION

(11) **EP 2 670 133 A1**
(43) Date of publication of application: **04.12.2013**
(21) Application number: 12197369.7
(22) Date of filing: 14.12.2012
(51) Int. Cl.: H04N 5/76, H04N 5/782, H04N 5/765

(54) **Recording apparatus, sharing, processing method, and computer program product**

(30) Priority: 30.05.2012 JP 2012123578
(71) Applicant: Kabushiki Kaisha Toshiba, Tokyo 105-8001 (JP)
(72) Inventor: Shibutani, Manabu, Tokyo, 105-8001 (JP)
(74) Representative: Henkel, Breuer & Partner

(57) **Abstract**

According to one embodiment, a recording apparatus (200) includes: a programming manager (702) configured to set up programmed recording of a program to be broadcast in response to an instruction from a user to register information of the program for which the programmed recording is set up in a program list; and a transmitter (708, 1608 ) configured to transmit the program list to a server (100) that makes the program list shared with another user to transmit, when the programmed recording is set up, information of the program for which the programmed recording is set up to the server (100).

## Description

### FIELD

Embodiments described herein relate generally to a recording apparatus, a sharing processing method, and a computer program.

### BACKGROUND

Conventionally, recording apparatuses have a function of programmed recording of a program. By using the programmed recording function, recording apparatuses can automatically record a program on a set channel (broadcasting station) at a set time.

For such recording apparatuses, there has been developed a technology for performing programmed recording by: transmitting programmed recording information to a server with a destination specified; notifying a destination recording apparatus of the programmed recording information from the server; and causing the destination recording apparatus to access the server, specify a desired program programmed to be recorded, and receive programmed information of the program thus specified from the server.

In the conventional technology, a source and a destination of programmed recording information are in a one-to-one relationship. As a result, the programmed recording information is simply used for personal use, and it is difficult to use the programmed recording information effectively.

Furthermore, in the conventional technology, a user of the destination recording apparatus needs to access the server and select desired programmed recording every time registered programmed recording is performed. As a result, operations performed by the user are made complicated.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic diagram of a network configuration of a recording system according to a first embodiment;
FIG. 2 is an exemplary block diagram of a functional configuration of a shared server in the first embodiment;
FIG. 3 is an exemplary view of a program list in the first embodiment;
FIG. 4 is another exemplary view of the program list in the first embodiment;
FIG. 5 is an exemplary view of a data structure of sharing management database in the first embodiment;
FIG. 6 is an exemplary block diagram of a hardware configuration of a recording and reproducing apparatus in the first embodiment;
FIG. 7 is an exemplary block diagram of a functional configuration of a controller of the recording and reproducing apparatus in the first embodiment;
FIG. 8 is an exemplary sequence diagram of a flow of program list sharing processing in the first embodiment;
FIG. 9 is an exemplary view of a list management screen in the first embodiment;
FIG. 10 is an exemplary view of a follow list screen in the first embodiment;
FIG. 11 is an exemplary view of a program list index screen in the first embodiment;
FIG. 12 is an exemplary view of a registration screen for programmed recording in the first embodiment;
FIG. 13 is an exemplary view of a registration screen for a play list in the first embodiment;
FIG. 14 is an exemplary view of a folder list screen for the program list in the first embodiment;
FIG. 15 is an exemplary view of a program list screen in the first embodiment;
FIG. 16 is an exemplary block diagram of a functional configuration of a controller of a recording and reproducing apparatus according to a second embodiment;
FIG. 17 is an exemplary view of a content registration screen in the second embodiment;
FIG. 18 is an exemplary view of a program list in the second embodiment;
FIG. 19 is an exemplary view of a program list screen in the second embodiment;
FIG. 20 is an exemplary schematic diagram of a network configuration of a recording system according to a third embodiment;
FIG. 21 is an exemplary block diagram of a functional configuration of a mobile terminal in the third embodiment; and
FIG. 22 is an exemplary sequence diagram of a flow of program list sharing processing in the third embodiment.

### SUMMARY

To overcome the problems and achieve the object mentioned above, according to an embodiment, a recording apparatus comprises: a programming manager configured to set up programmed recording of a program to be broadcast in response to an instruction from a user to register information of the program for which the programmed recording is set up in a program list; and a transmitter configured to transmit the program list to a server that makes the program list shared with another user to transmit, when the programmed recording is set up, information of the program for which the programmed recording is set up to the server.

According to another embodiment of the invention, a recording apparatus comprises: a search module configured to search for a program list of a desired user from a server configured to store therein the program list in which information of a program for which programmed recording is set up is registered and a user who creates the program list in a manner associated with each other; a requesting module configured to make a request for sharing of the program list of the desired user who is searched for to the server to receive the program list of the desired user requested; and a receiver configured to receive, when new programmed recording is registered in the program list of the desired user, information related to a program for which the new programmed recording is set up from the server.

According to still another embodiment of the invention, a sharing processing method comprises: searching for a program list of a desired user from a server configured to store therein the program list in which information of a program for which programmed recording is set up is registered and a user who creates the program list in a manner associated with each other; making a request for sharing of the program list of the desired user who is searched for to the server to receive the program list of the desired user requested; and receiving, when new programmed recording is registered in the program list of the desired user, information related to a program for which the new programmed recording is set up from the server.

According to still another embodiment of the invention, a computer program product having a non-transitory computer readable medium including programmed instructions, wherein the instructions, when executed by a computer, cause the computer to perform: searching for a program list of a desired user from a server configured to store therein the program list in which information of a program for which programmed recording is set up is registered and a user who creates the program list in a manner associated with each other; making a request for sharing of the program list of the desired user who is searched for to the server to receive the program list of the desired user requested; receiving, when new programmed recording is registered in the program list of the desired user, information related to a program for which the new programmed recording is set up from the server; registering the information related to the program for which the new programmed recording is set up in the program list; and transmitting the program list in which the information related to the program for which the new programmed recording is set up to a recording apparatus.

### DETAILED DESCRIPTION

### First Embodiment

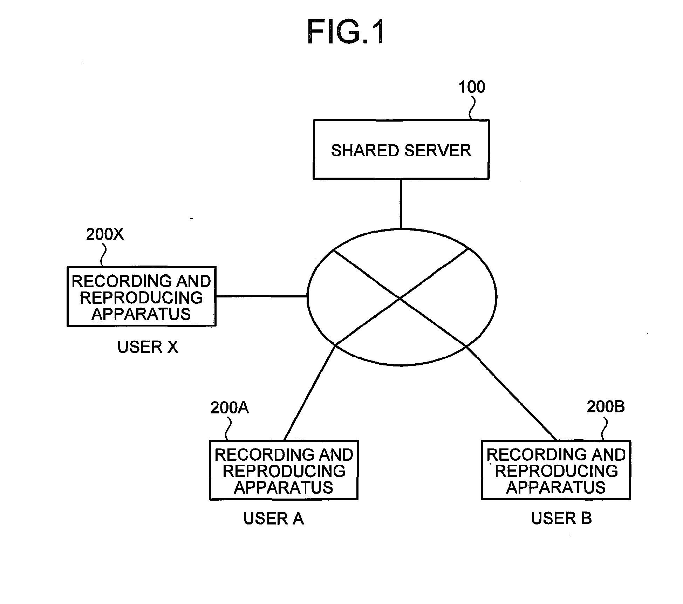

FIG. 1 is a schematic diagram of a network configuration of a recording system according to a first embodiment. As illustrated in FIG. 1, the recording system according to the first embodiment has a configuration in which a plurality of recording and reproducing apparatuses 200X, 200A, and 200B and a shared server 100 are connected to one another via a network such as the Internet. Hereinafter, the recording and reproducing apparatuses 200X, 200A, and 200B may be collectively referred to as a "recording and reproducing apparatus 200".

The recording and reproducing apparatus 200 performs programmed recording of a broadcast program and reproduces a recorded program. The recording and reproducing apparatus 200 according to the first embodiment generates a program list in which information of programs programmed to be recorded is registered.

In the first embodiment, the recording and reproducing apparatus 200 further generates a play list used for sequentially reproducing a plurality of recorded programs continuously and reproduces the programs in accordance with the play list.

The shared server 100 receives the program list from the recording and reproducing apparatus 200 and makes the program list thus received shared with users of other recording and reproducing apparatuses 200.

In the first embodiment, the recording and reproducing apparatus 200X used by a user X uploads a program list onto the shared server 100, the shared server 100 makes the program list thus uploaded shared, and the recording and reproducing apparatus 200A used by a user A and the recording and reproducing apparatus 200B used by a user B download and use the program list shared by the shared server 100. The configurations and the functions of the recording and reproducing apparatuses 200X, 200A, and 200B are identical to one another.

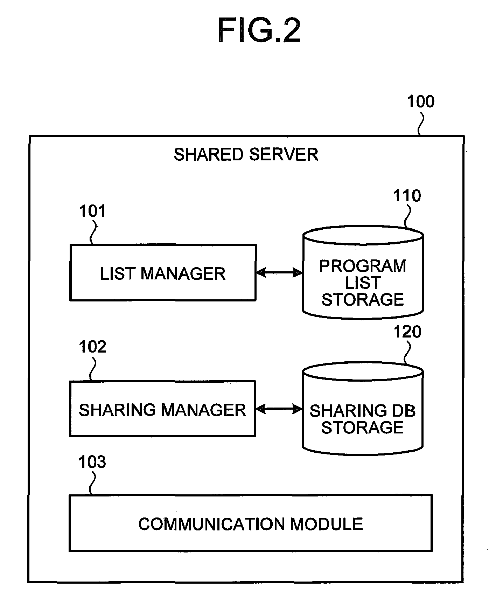

FIG. 2 is a block diagram of a functional configuration of the shared server 100. As illustrated in FIG. 2, the shared server 100 mainly comprises a list manager 101, a sharing manager 102, a communication module 103, a program list storage 110, and a sharing database (DB) storage 120.

The communication module 103 transmits and receives various types of data including a program list to and from the recording and reproducing apparatus 200 via the network.

The list manager 101 stores the program list received from the recording and reproducing apparatus 200X and the like in the program list storage 110 and manages the program list. Specifically, if the recording and reproducing apparatus 200 adds a new program and a new play list to the program list, the list manager 101 adds and stores the new program and the new play list to and in a program list corresponding thereto.

The program list storage 110 is a storage medium, such as a hard disk drive (HDD) and a memory, that stores therein the program list received from the recording and reproducing apparatus 200.

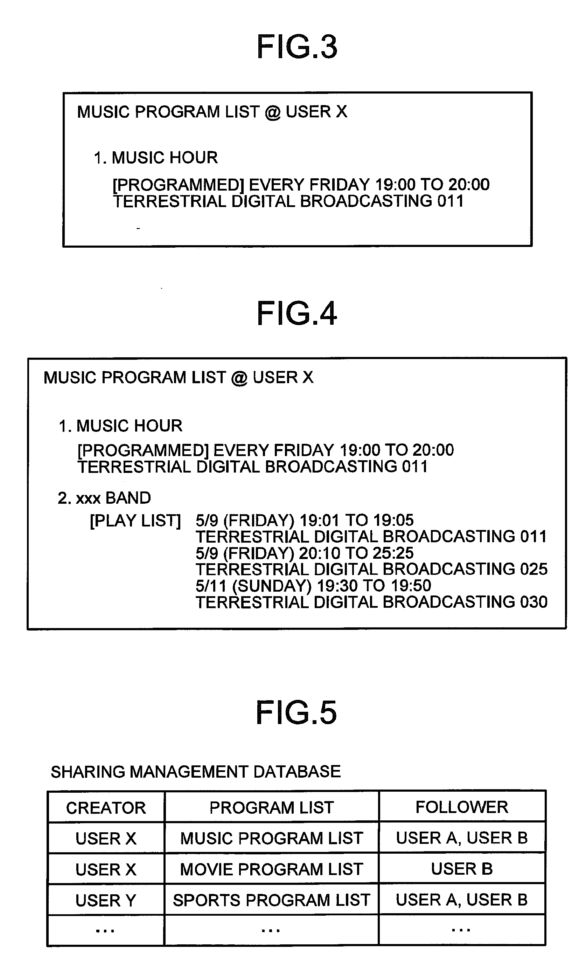

The program list is list data in which a list of programs programmed to be recorded by the user and a play list are registered. FIG. 3 and FIG. 4 are views of examples of the program list. The program list shows a title in a format of "program list name @ creator" on the first line and indicates that the program list is a program list of the "program list name" created by the "creator". The examples illustrated in FIG. 3 and FIG. 4 indicate that the program lists are music program lists created by the user X. In other words, the program lists illustrated in FIG. 3 and FIG. 4 are program lists received from the recording and reproducing apparatus 200X of the user X.

As illustrated in FIG. 3, information related to a program, such as a name of a program programmed to be recorded ("music hour"), discrimination information indicating that the program is a program programmed to be recorded ("programmed"), a date or a day of the week of the programmed recording ("every Friday"), a time of the programmed recording ("19:00 to 20:00"), and a channel ("terrestrial digital broadcasting 011") is registered in the program list.

Furthermore, as illustrated in FIG. 4, a play list is registered in the program list in addition to the program programmed to be recorded. The play list is a list in which a plurality of recorded programs are registered in order of reproduction to allow a user to view the programs continuously. In the example illustrated in FIG. 4, discrimination information indicating that the list is a play list ("play list") and program related information, such as a date, a time, and a channel of each of a plurality of programs are registered, for example.

Referring back to FIG. 2, the sharing manager 102 performs management such as setting of sharing on the program list stored in the program list storage 110. Specifically, in response to a request for following made by a user of the recording and reproducing apparatus 200, the sharing manager 102 performs setting such that the user who makes the request follows a program list to be a target of the request among the program lists stored in the program list storage 110. The sharing manager 102 then transmits the program list to the recording and reproducing apparatus 200 of the user who makes the request.

Furthermore, in response to a request for cancellation of following for a specified program list made by the user of the recording and reproducing apparatus 200, the sharing manager 102 cancels following performed by the user who makes the request for the program list thus specified.

The sharing manager 102 performs such sharing management using a sharing management database. The sharing DB storage 120 is a storage medium, such as an HDD and a memory, that stores therein the sharing management database. The sharing management database is a database used for managing sharing information, such as setting of following and cancellation of following, for the program list stored in the program list storage 110.

FIG. 5 is a view of an example of a data structure of the sharing management database. As illustrated in FIG. 5, a creator of a program list, identification information of the program list, such as a program list name, and a follower who follows the program list are associated with one another in the sharing management database.

The example illustrated in FIG. 5 indicates that a music program list created by the user X has followers of the user A and the user B. If a user makes a request for following with a creator and a program list specified, the sharing manager 102 registers the user who makes the request for following in the item of a follower of the program list of the creator thus specified.

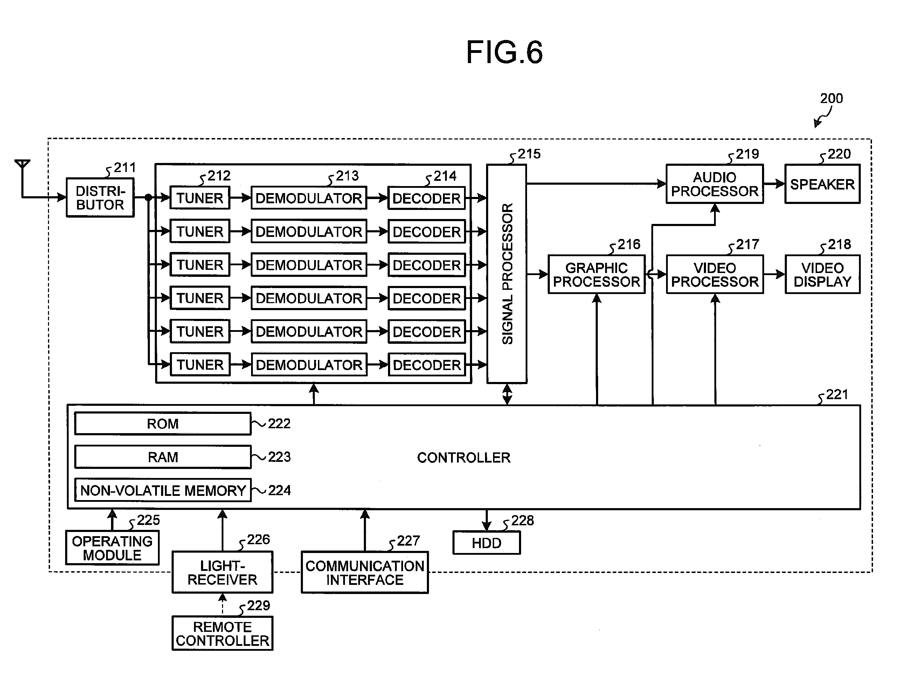

The recording and reproducing apparatus 200 will now be described in detail. FIG. 6 is a block diagram of a hardware configuration of the recording and reproducing apparatus 200 according to the first embodiment. The recording and reproducing apparatus 200 comprises a distributer 211, six tuners 212, demodulators 213, and decoders 214, a signal processor 215, a graphic processor 216, a video processor 217, a video display 218, an audio processor 219, a speaker 220, a controller 221, an operating module 225, a light-receiver 226, a communication interface 227, an HDD 228, and a remote controller 229.

The recording and reproducing apparatus 200 comprises the controller 221 that controls operations of each module. The controller 221 has a central processing unit (CPU) embedded, for example. The controller 221 starts a system control program and various types of processing programs stored in advance in a read-only memory (ROM) 222 in response to an operation signal received from the operating module 225 and an operation signal transmitted from the remote controller 229 and received via the light-receiver 226. In accordance with the programs thus started, the controller 221 controls operations of each module using a random access memory (RAM) 223 as a work memory. Various types of setting information and control information required for operation control of each module are stored in a non-volatile memory 224, for example.

The distributer 211 distributes a signal containing a broadcast content transmitted from each broadcasting station to each of the tuners 212 for each broadcasting station.

The tuner 212 tunes the signal thus received and converts the signal into a processable baseband signal. The data signal is in a compressed state. In the first embodiment, the recording and reproducing apparatus 200 comprises six tuners 212. The tuner 212 tunes the digital broadcast signal thus received and transmits the digital broadcast signal thus tuned to the demodulator 213 corresponding thereto. While the number of tuners 212 provided to the recording and reproducing apparatus 200 is six in the first embodiment, the number is not limited thereto. Alternatively, six or less or six or more tuners may be provided.

The demodulator 213 demodulates TS and supplies the TS thus demodulated to the decoder 214 corresponding thereto. The decoder 214 decodes the TS into a digital video signal, an audio signal, and the like and outputs the signal thus decoded to the signal processor 215. Six demodulators 213 and six decoders 214 are provided, which is the same number as that of the tuners 212, and each of them is allocated to each of the six tuners 212.

The signal processor 215 performs appropriate signal processing on the broadcast signal output from the decoder 214. The broadcast signal is divided into a data signal, a video signal, and an audio signal. The data signal contains program related information, which is various types of information indicating a broadcast program. The program related information contains program information including a program name of a program, a genre to which the program belongs, channel information indicating a channel on which the program is broadcast, and date-and-time information indicating a date and a time (hereinafter, referred to as a date and time) when the program is broadcast for each program, for example. The video signal thus separated is output to the graphic processor 216, and the audio signal is output to the audio processor 219. Furthermore, the signal processor 215 performs predetermined signal processing on an input signal received from an external device via the communication interface 227. The video signal and the audio signal are collectively referred to as content data.

The graphic processor 216 decodes the video signal output from the signal processor 215. The video signal thus decoded is output to the video processor 217.

The video processor 217 converts the signal output from the graphic processor 216 into a video signal in a format displayable on the video display 218. The video signal thus converted is output to the video display 218. Furthermore, the video processor 217 can output the video signal to an external device, such as the HDD 228, connected to an external output terminal (not illustrated). The video display 218 is a display of a digital television in the first embodiment. The video display 218 may be provided outside of the recording and reproducing apparatus 200 and be connected to the recording and reproducing apparatus 200.

The audio processor 219 converts the audio signal thus received into an audio signal in a format reproducible by the speaker 220. The audio signal thus converted is output to and reproduced by the speaker 220. Furthermore, the audio processor 219 can output the audio signal to an external device (not illustrated), such as an amplifier, connected to an external output terminal (not illustrated).

The controller 221 can store content data, an image, music, and various types of information (e.g., program related information contained in the data signal and content data separated from the broadcast signal and a recording schedule indicating a channel selected in advance as a channel to be recorded) in the HDD 228. The controller 221 acquires program related information contained in the data signal separated from the broadcast signal by the signal processor 215 at predetermined time intervals and updates the program related information stored in the HDD 228 with the program related information thus acquired. This makes it possible to keep the program related information stored in the HDD 228 up-to-date. Furthermore, the controller 221 can read content data, an image, and music stored in the HDD 228 to display the content data and the image on the video display 218 and to output the music from the speaker 220.

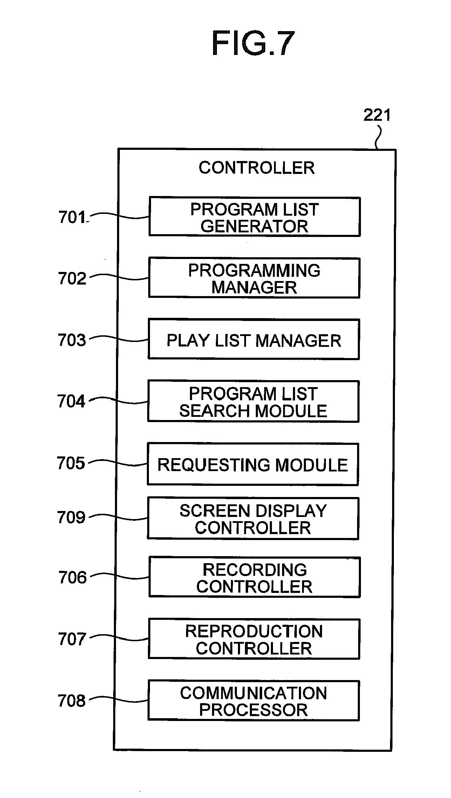

FIG. 7 is a block diagram of a functional configuration of the controller 221 of the recording and reproducing apparatus 200 in the first embodiment. The controller 221 mainly comprises a program list generator 701, a programming manager 702, a play list manager 703, a program list search module 704, a requesting module 705, a screen display controller 709, a recording controller 706, a reproduction controller 707, and a communication processor 708.

The program list generator 701 generates a program list. The programming manager 702 sets up programmed recording of a broadcast program in response to an instruction issued by the user from the remote controller 229 or the like and registers program related information of the program programmed to be recorded in the program list. The play list manager 703 registers a play list in the program list in response to an instruction issued by the user from the remote controller 229 or the like. The program list search module 704 searches for a program list of a desired user from the program lists stored in the program list storage 110 of the shared server 100.

The requesting module 705 makes a request for sharing of the program list of the desired user who is searched for to the shared server 100 and receives the program list of the desired user thus requested. In the first embodiment, the requesting module 705 makes a request for following of the program list of the desired user thus searched for to the shared server 100 as a sharing request.

The screen display controller 709 performs control so as to display various types of screens on the video display 218. The recording controller 706 controls recording and programmed recording of a program. The reproduction controller 707 controls reproduction of a recorded program and reproduction of a program registered in the play list.

The communication processor 708 transmits and receives various types of data to and from the shared server 100. In the first embodiment, to make a program list shared, the communication processor 708 transmits the program list to the shared server 100 and transmits program related information of a program programmed to be recorded to the shared server 100 every time programmed recording is set up. Furthermore, the communication processor 708 transmits a play list to the shared server 100 every time a play list is registered in the program list.

The communication processor 708 inquires of the shared server 100 whether new programmed recording is registered in the program list of the user being followed. If new programmed recording is registered, the communication processor 708 receives program related information of a program newly programmed to be recorded from the shared server 100. Furthermore, the communication processor 708 inquires of the shared server 100 whether a new play list is registered in the program list of the user being followed. If a new play list is registered, the communication processor 708 receives the new play list from the shared server 100.

The communication processor 708 inquires whether a new program or a new play list is added to the program list of the user being followed at regular time intervals or at the time of startup of the recording and reproducing apparatus 200.

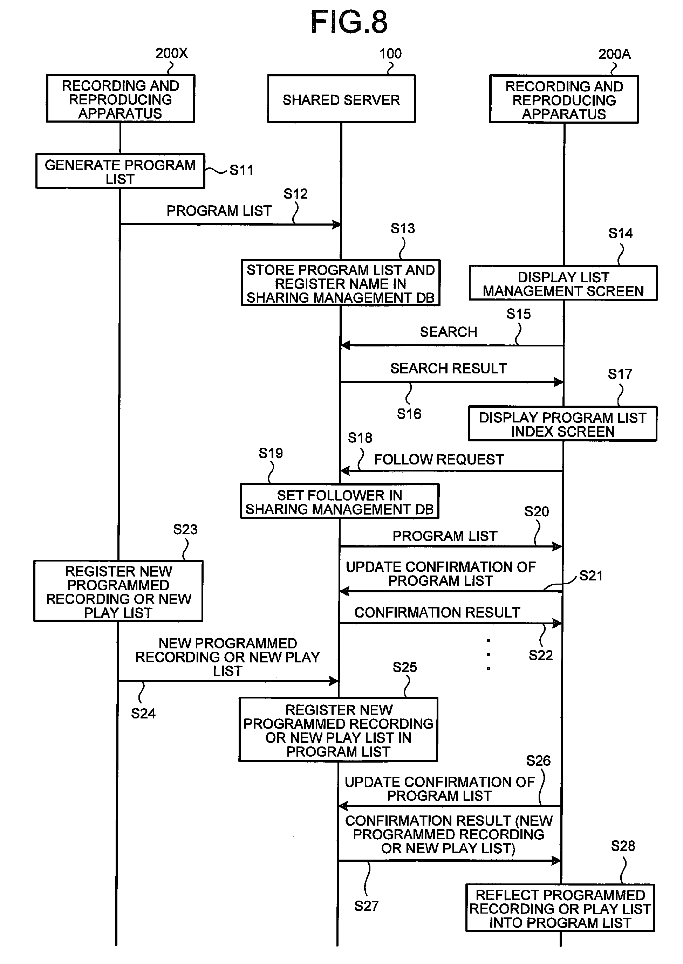

The program list sharing processing performed by the recording system configured as described above according to the first embodiment will now be explained. FIG. 8 is a sequence diagram of a flow of the program list sharing processing in the

### first embodiment.

-If the user X issues a creation instruction of a program list in the recording and reproducing apparatus 200X, the program list generator 701 of the recording and reproducing apparatus 200X generates a program list (S11). Specifically, if the programming manager 702 sets up programmed recording of a program, the program list generator 701 generates a blank program list, and the programming manager 702 registers program related information of the program programmed to be recorded in the program list. The communication processor 708 of the recording and reproducing apparatus 200X then transmits the program list thus generated to the shared server 100 (S12).

In the shared server 100, the communication module 103 receives the program list from the recording and reproducing apparatus 200X, the list manager 101 stores the program list thus received in the program list storage 110, and the sharing manager 102 registers a name of the program list thus received in a manner associated with the user X who creates the program list in the sharing management database (S13).

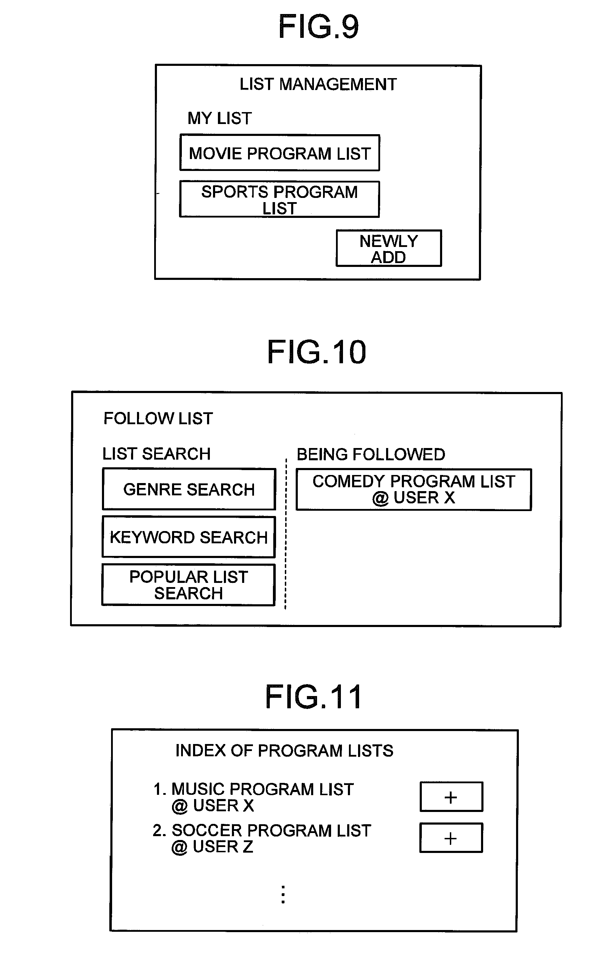

By contrast, the user A who desires to share the program list causes the screen display controller 709 of the recording and reproducing apparatus 200A to display a list management screen on the video display 218 (S14). FIG. 9 is a view of an example of the list management screen. As illustrated in FIG. 9, the list management screen displays a program list created by the user A. If the user A presses a newly add button on the list management screen, the screen display controller 709 displays a follow list screen on the video display 218.

FIG. 10 is a view of an example of the follow list screen. As illustrated in FIG. 10, the follow list screen displays a program list of a user being followed by the user A. In the example illustrated in FIG. 10, the user A follows a comedy program list of the user X. The program list followed by the user A is stored in a memory of the recording and reproducing apparatus 200A, for example.

If the user A searches for another program list desired to be followed on the follow list screen, the user A presses a button, such as genre search, keyword search, and popular list search. With this operation, the user specifies search conditions as needed, and the program list search module 704 makes a search request of the program list to the shared server 100 (S15).

In the shared server 100, if the communication module 103 receives the search request, the list manager 101 searches for a program list satisfying the search conditions, and the communication module 103 transmits an index of the program lists thus retrieved as a search result to the recording and reproducing apparatus 200A that makes the search request (S16).

In the recording and reproducing apparatus 200A that receives the search result, the screen display controller 709 displays the index of the program lists serving as the search result on the video display 218 (S17). FIG. 11 is a view of the program list index screen. As illustrated in FIG. 11, the program list index screen displays an index of program lists created by a creator in a format of "program list name @ creator". On the program list index screen illustrated in FIG. 11, if the user A presses a "+" button arranged on the right side of a program list of a desired creator, the requesting module 705 transmits a request to follow "program list name @ creator" corresponding to the "+" button thus pressed to the shared server 100 (S18).

In the shared server 100 that receives the follow request, the sharing manager 102 searches for the creator and the program list specified by the follow request from the sharing management database and registers identification information of the user A who makes the follow request in an item of a follower corresponding to the program list thus retrieved (S19) . Thus, the program list is shared. The communication module 103 of the shared server 100 transmits the program list of the user X thus shared to the recording and reproducing apparatus 200A of the user A (S20).

The recording and reproducing apparatus 200A receives the program list of the user X from the shared server 100 and stores the program list in an HDD, for example.

The recording and reproducing apparatus 200A inquires of the shared server 100 whether a new program or a new play list is registered in the program list of the user followed by the user A and requests the shared server 100 to transmit update confirmation of the program list (S21).

The shared server 100 transmits a confirmation result indicating being updated or not being updated to the recording and reproducing apparatus 200A (S22). Such update confirmation of the program list is performed at regular time intervals.

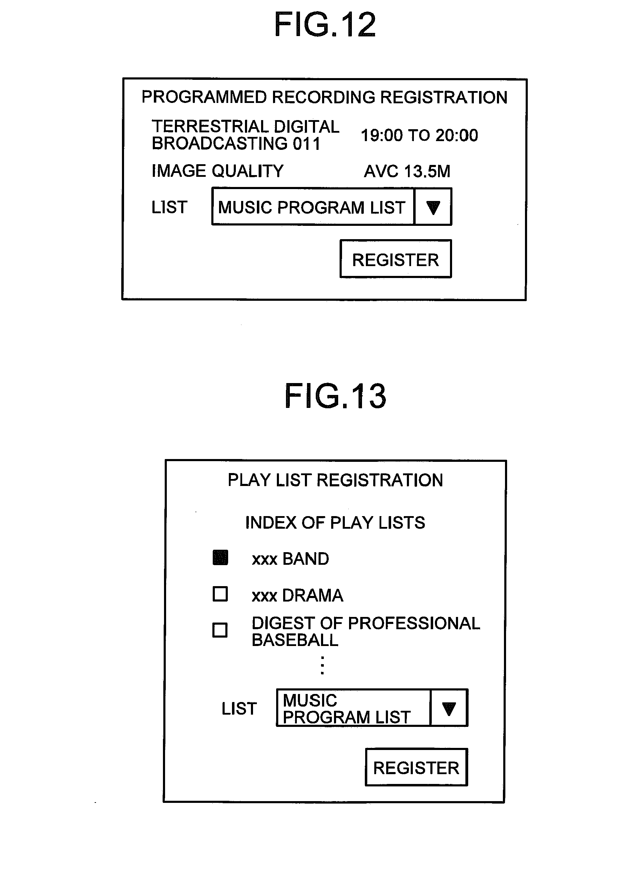

An assumption is made that the user X registers new programmed recording or a new play list in the program list followed by a follower in the recording and reproducing apparatus 200X (S23). FIG. 12 is a view of a registration screen for programmed recording. FIG. 13 is a view of a registration screen for a play list. On the registration screens, besides a new program programmed to be recorded or a new play list to be newly registered, a program list in which the program or the play list is registered can be selected.

If new programmed recording or a new play list is registered in the program list in the recording and reproducing apparatus 200X, the communication processor 708 of the recording and reproducing apparatus 200X transmits the new programmed recording or the new play list to the shared server 100 (S24).

The shared server 100 receives the new programmed recording or the new play list, and the list manager 101 registers the new programmed recording or the new play list in a program list corresponding thereto in the program list storage 110 (S25). If the shared server 100 receives a request for update confirmation of the program list from the recording and reproducing apparatus 200A (S26), the shared server 100 transmits the new programmed recording or the new play list to the recording and reproducing apparatus 200A as a confirmation result (S27).

The recording and reproducing apparatus 200A of the user A receives the new programmed recording or the new play list added to the program list of the user X being followed as the confirmation result. The programming manager 702 adds and reflects the new programmed recording thus received to and in the program list, or the play list manager 703 adds and reflects the new play list thus received to and in the program list (S28).

An assumption is made that the user A follows a music program list of the user X ("music program list @ user X") and that a program programmed to be recorded and a play list are registered in the music program list as illustrated in the example of FIG. 4.

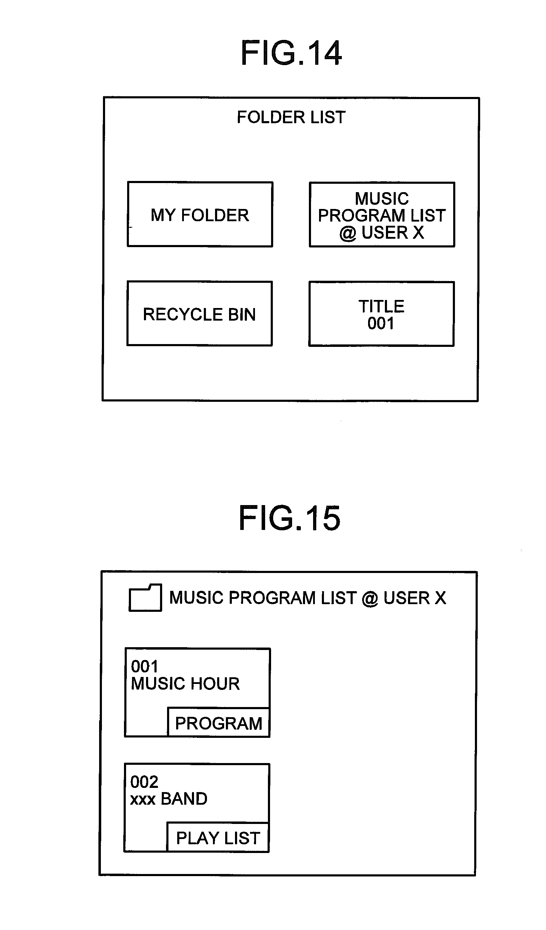

At this time, in the recording and reproducing apparatus 200A, the screen display controller 709 displays a folder list screen of the program list illustrated in FIG. 14. The folder list screen displays "my folder" that is a folder storing therein the program list created by the user A, "music program list @ user X" that is a folder of the program list of the user being followed, a "recycle bin" folder, and "title 001" that is a program yet to be sorted into the folders.

If the user X specifies "music program list @ the user X" folder on the folder list screen, the screen display controller 709 of the recording and reproducing apparatus 200A displays a program list screen illustrated in FIG. 15. The program list screen displays a program programmed to be recorded and a play list in a manner corresponding to the program list illustrated in the example of FIG. 4.

If the user A specifies a program programmed to be recorded "001 music hour" on the program list screen in FIG. 15, and the program has already been recorded, the reproduction controller 707 reproduces the program.

If the user A specifies a play list program "002 xxx band" on the program list screen in FIG. 15, the reproduction controller 707 reproduces the program registered in the play list.

As described above, in the first embodiment, the user A shares the program list of the desired user X in a followable manner via the shared server 100 with a large number of users of the recording and reproducing apparatus 200A, for example. Thus, by disclosing information of programmed recording and a play list to all the users, the source and the destination of the program list are in a one-to-many relationship. As a result, an unspecified large number of users who share their tastes can use the programmed recording and the play list registered in the program list.

In the first embodiment, if new programmed recording and a new play list are registered in the program list of the user X being followed, the new programmed recording and the new play list are transmitted to the recording and reproducing apparatus 200A of the user A who is a follower from the shared server 100. Therefore, according to the first embodiment, the user A can perform multiple programmed recording and create a plurality of play lists automatically simply by selecting the program list. Furthermore, according to the first embodiment, even if new programmed recording and a new play list are registered in the program list, and the user A serving as the destination performs no explicit operation in particular, it is possible to set up the new programmed recording and to reproduce the new play list.

In the first embodiment, information of editing of the program list performed by the user X serving as the source of the program list can be shared by an unspecified large number of users who are followers, and a specific scene in a recorded title alone can be shared. In other words, according to the first embodiment, by allowing programmed recording and a play list to be widely disclosed, it is possible to achieve effective use of programmed recording information and to simplify operations to set up programmed recording and the like performed by the user.

### Second Embodiment

In the first embodiment, programmed recording and a play list can be registered in the program list to be shared. In a second embodiment, information of a content of a video distribution website on a network, a content of video-on-demand, and a content of DVD/CD and the like can be further registered in the program list and can be shared by an unspecified large number of users.

The network configuration of a recording system according to the second embodiment is the same as that of the first embodiment. Furthermore, the configuration of a shared server 100 according to the second embodiment is the same as that of the first embodiment.

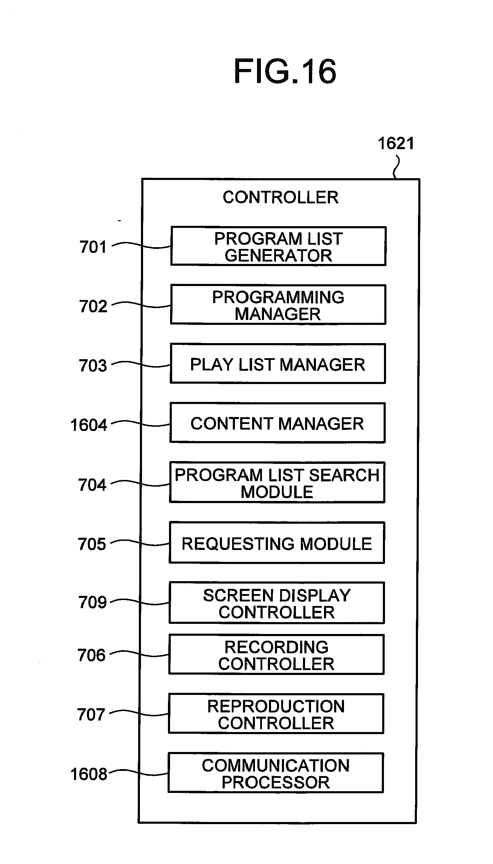

FIG. 16 is a block diagram of a functional configuration of a controller 1621 of a recording and reproducing apparatus 200 according to the second embodiment. The hardware configuration of the recording and reproducing apparatus 200 according to the second embodiment is the same as that of the first embodiment.

The controller 1621 of the recording and reproducing apparatus 200 according to the second embodiment mainly comprises a program list generator 701, a programming manager 702, a play list manager 703, a content manager 1604, a program list search module 704, a requesting module 705, a screen display controller 709, a recording controller 706, a reproduction controller 707, and a communication processor 1608.

The functions and the configurations of the program list generator 701, the programming manager 702, the play list manager 703, the program list search module 704, the requesting module 705, the screen display controller 709, the recording controller 706, and the reproduction controller 707 are the same as those in the first embodiment.

The content manager 1604 causes the user to input information related to a URL of a content of a video distribution website on the network (hereinafter, referred to as an "Internet video"), a content of a video-on-demand video distribution website (hereinafter, referred to as "VOD"), and a content of a URL of a website for introducing DVD/CD and the like with a remote controller via a content registration screen and registers the information in a program list.

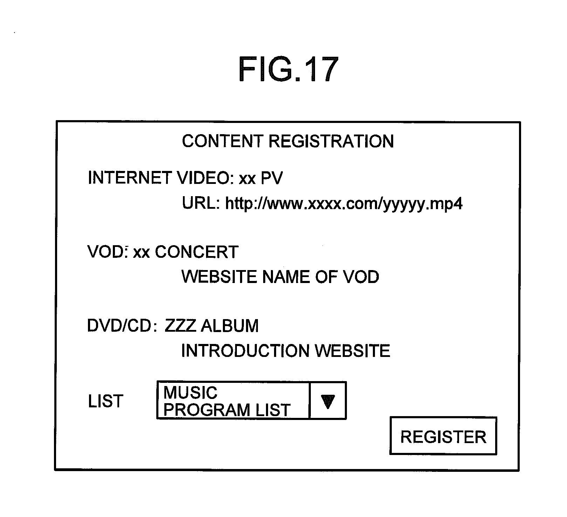

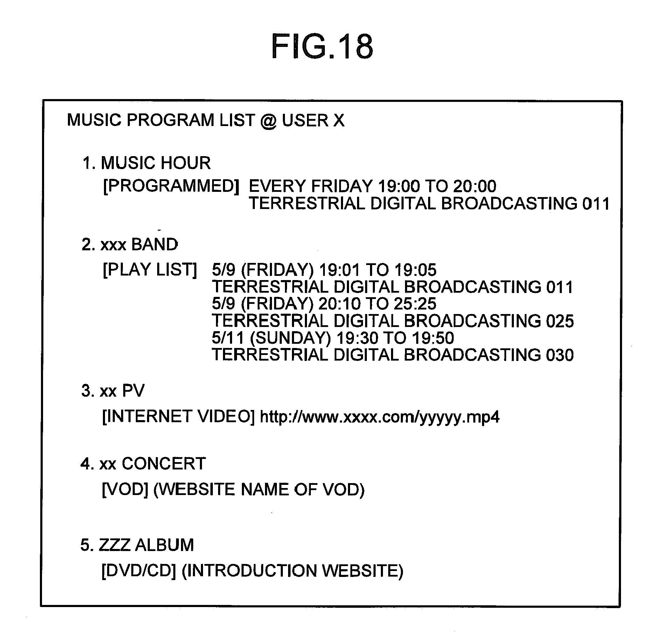

FIG. 17 is a view of an example of the content registration screen. As illustrated in FIG. 17, the user inputs information related to the content, such as a title and a URL of a website in the case of an Internet video, a title and a name of a VOD website in the cause of VOD, and a title and a URL of an introduction website in the case of DVD/CD and the like. The program list in which the information related to the content is registered via the content registration screen is illustrated in FIG. 18.

Referring back to FIG. 16, the communication processor 1608 has the same function as that in the first embodiment. In addition, the communication processor 1608 transmits information related to the content, such as the URL of the Internet video, the VOD website, and the URL of the website introducing DVD/CD and the like, to the shared server 100 every time the information related to the content, such as the URL of the Internet video, the VOD website, and the URL of the website introducing DVD/CD and the like, is registered in the program list.

Furthermore, the communication processor 1608 has the same function as that in the first embodiment. In addition, the communication processor 1608 inquires of the shared server 100 whether information related to a new content, such as a URL of a new Internet video, a new VOD website, and a URL of a new website introducing DVD/CD and the like, is registered in the program list of the user being followed. If information related to a new content, such as a URL of a new Internet video, a new VOD website, and a URL of a new website introducing DVD/CD and the like, is registered in the program list, the communication processor 1608 receives the information related to the new content from the shared server 100.

An assumption is made that the user A follows a music program list of the user X ("music program list @ user X") and that a program programmed to be recorded, a play list, an Internet video, VOD, and CD/DVD are registered in the music program list as illustrated in the example of FIG. 18.

At this time, in a recording and reproducing apparatus 200A, the screen display controller 709 displays a folder list of the program list illustrated in FIG. 14 in the same manner as in the first embodiment.

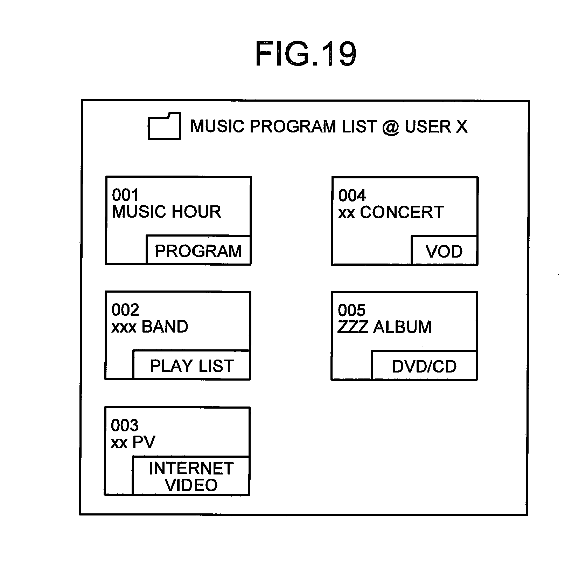

If the user X specifies a "music program list @ user X" folder on the folder list screen illustrated in FIG. 14, the screen display controller 709 of the recording and reproducing apparatus 200A displays a program list screen illustrated in FIG. 19. The program list screen displays a program programmed to be recorded, a play list, an Internet video, VOD, and DVD/CD in a manner corresponding to the program list illustrated in the example of FIG. 18.

If the user A specifies an Internet video "003 xx PV" on the program list screen in FIG. 19, a browser is activated to access the URL of the Internet video registered in the program list of FIG. 18. If the user A specifies VOD "004 xx concert", the browser is activated to access the website name of the VOD registered in the program list of FIG. 18. If the user A specifies DVD/CD "005 ZZZ album", the browser is activated to access the URL of the website introducing DVD/CD registered in the program list of FIG. 18.

As described above, in the second embodiment, information of a content, such as an Internet video, video on demand (hereinafter, referred to as "VOD"), and DVD/CD and the like, can be registered in the program list and can be shared by an unspecified large number of users. Therefore, it is possible to achieve effective use of various types of contents and to simplify operations to view the contents and the like performed by the user.

### Third Embodiment

In the first and the second embodiments, the recording and reproducing apparatus 200 follows a program list of a desired user and receives programmed recording and the like newly added to the program list being followed. In a third embodiment, a mobile terminal can perform the same operations.

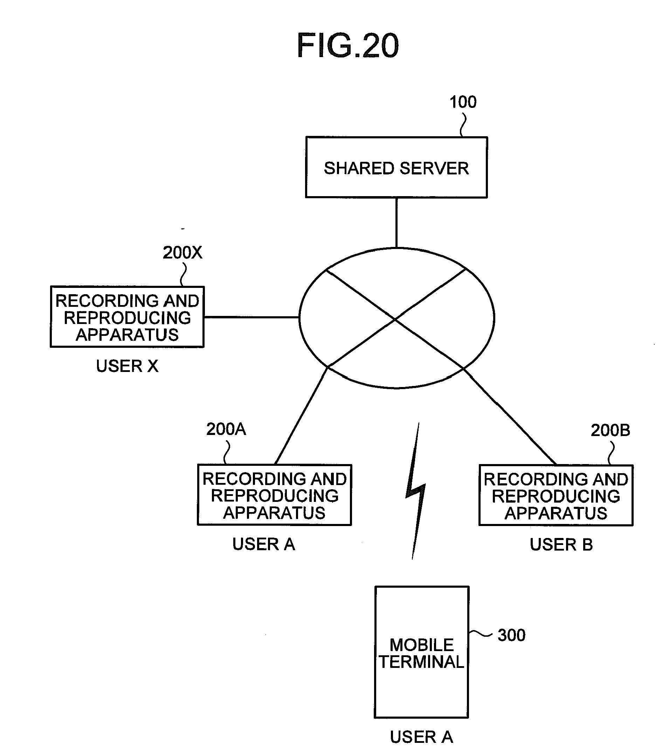

FIG. 20 is a schematic diagram of a network configuration of a recording system according to the third embodiment. As illustrated in FIG. 20, the recording system according to the third embodiment has a configuration in which a plurality of recording and reproducing apparatuses 200X, 200A, and 200B, a shared server 100, and a mobile terminal 300 are connected to one another via a network such as the Internet.

The mobile terminal 300 is used by the user A. Therefore, the user A follows a program list of a desired user and receives programmed recording and the like newly added to the program list being followed with the recording and reproducing apparatus 200A. In addition, the user A can follow a program list of a desired user and receive programmed recording and the like newly added to the program list being followed also with the mobile terminal 300.

The configurations and the functions of the shared server 100 and the recording and reproducing apparatus 200 according to the third embodiment are the same as those in the first embodiment.

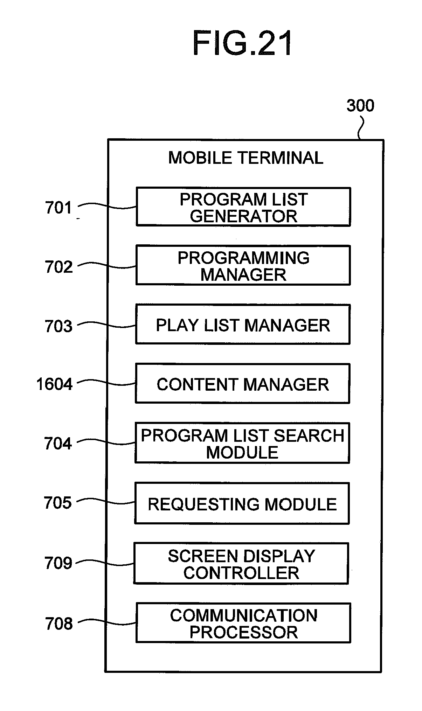

FIG. 21 is a block diagram of a functional configuration of the mobile terminal 300 according to the third embodiment. The mobile terminal 300 corresponds to a mobile phone or a smartphone, for example. As illustrated in FIG. 21, the mobile terminal 300 according to the third embodiment mainly comprises a program list generator 701, a programming manager 702, a play list manager 703, a content manager 1604, a program list search module 704, a requesting module 705, a screen display controller 709, and a communication processor 1608. The functions of the modules are the same as those of the modules forming the controller 1621 of the recording and reproducing apparatus 200 according to the second embodiment. However, the mobile terminal 300 comprises no recording controller or no reproduction controller unlike the recording and reproducing apparatus 200.

In addition to the function of the communication processor 708 of the recording and reproducing apparatus 200, the communication processor 708 of the mobile terminal 300 according to the third embodiment has a function to transfer a program list received from the shared server 100 to the recording and reproducing apparatus 200A of the user A. Furthermore, if the communication processor 708 of the mobile terminal 300 receives programmed recording, a play list, and information related to a content newly registered in a program list by the user X in the recording and reproducing apparatus 200X from the shared server 100, the communication processor 708 transfers the new programmed recording, the new play list, and the information related to the new content to the recording and reproducing apparatus 200A of the user A.

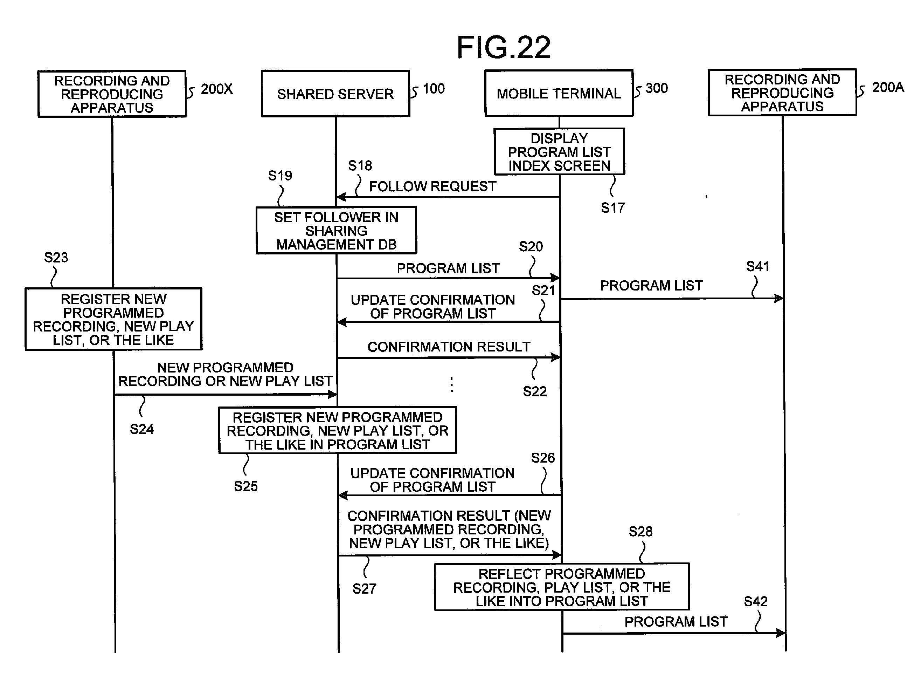

Program list sharing processing performed by the recording system configured as described above according to the third embodiment will now be explained. FIG. 22 is a sequence diagram of a flow of the program list sharing processing according to the third embodiment.

In the mobile terminal 300, the screen display controller 709 displays an index of program lists (refer to FIG. 11) on a liquid crystal display (S17). The mobile terminal 300 specifies a program list of a desired creator on the program list index screen, and the requesting module 705 transmits a request to follow the program list of the user thus specified to the shared server 100 (S18).

In the shared server 100 that receives the follow request, a sharing manager 102 searches for the creator and the program list specified by the follow request from a sharing management database and registers identification information of the user A who makes the follow request in an item of a follower corresponding to the program list thus retrieved (S19) . Thus, the program list is shared. A communication module 103 of the shared server 100 transmits the program list of the user X thus shared to the mobile terminal 300 of the user A (S20).

The communication processor 708 of the mobile terminal 300 of the user A that receives the program list of the user X transmits the program list of the user X thus received to the recording and reproducing apparatus 200A of the user A (S41). The mobile terminal 300 and the recording and reproducing apparatus 200A store the program list of the user X in an HDD, for example.

The mobile terminal 300 inquires of the shared server 100 whether a new program, a new play list, or information of a new content is registered in the program list of the user followed by the user A and requests the shared server 100 to transmit update confirmation of the program list (S21). The shared server 100 transmits a confirmation result indicating being updated or not being updated to the mobile terminal 300 (S22).

An assumption is made that the user X registers new programmed recording, a new play list, or information of a new content in the program list followed by a follower in the recording and reproducing apparatus 200X (S23).

If new programmed recording, a new play list, or information of a new content is registered in the program list in the recording and reproducing apparatus 200X, the communication processor 708 of the recording and reproducing apparatus 200X transmits the new programmed recording, the new play list, or the information of the new content to the shared server 100 (S24).

The shared server 100 receives the new programmed recording, the new play list, or the information of the new content, and a list manager 101 registers the new programmed recording, the new play list, or the information of the new content in a program list corresponding thereto in a program list storage 110 (S25). If the shared server 100 receives a request for update confirmation of the program list from the mobile terminal 300 (S26), the shared server 100 transmits the new programmed recording, the new play list, or the information of the new content to the recording and reproducing apparatus 200A as a confirmation result (S27).

The mobile terminal 300 receives the new programmed recording, the new play list, or the information of the new content added to the program list of the user X being followed as the confirmation result. The programming manager 702 adds and reflects the new programmed recording thus received to and in the program list, the play list manager 703 adds the new play list thus received to the program list, or the content manager 1604 adds and reflects the information of the new content to and in the program list (S28). The communication processor 708 transmits the program list into which the information is reflected to the recording and reproducing apparatus 200A of the user A (S42).

As described above, in the third embodiment, the mobile terminal 300 also follows a program list of a desired user and receives programmed recording and the like newly added to the program list being followed. Therefore, it is possible to further achieve effective use of programmed recording information and to further simplify operations to set up programmed recording performed by the user.

The mobile terminal 300 in the third embodiment has a hardware configuration comprising a storage device, such as a CPU, a ROM, a RAM, and a flash memory, a display device, such as a liquid crystal display, and an input device, such as a numerical keypad, for example.

The communication processors 708 and 1608 of the recording and reproducing apparatus 200 according to the first and the second embodiments and the communication processor 708 of the mobile terminal 300 according to the third embodiment transmit program related information of a program programmed to be recorded to the shared server 100 every time programmed recording is set up, transmit a play list to the shared server 100 every time a play list is registered in the program list, and transmit information related to a content to the shared server 100 every time information related to a content is registered in the program list. However, operational timings for transmitting program related information, a play list, and information related to a content to the shared server 100 are not limited thereto.

The communication processors 708 and 1608 may be configured so as to transmit program related information, a play list, and information related to a content to the shared server 100 at regular time intervals, at a time point when the program related information, the play list, and the information related to the content each reach a predetermined amount, or at other arbitral timings to the shared server 100, for example.

The communication processors 708 and 1608 of the recording and reproducing apparatus 200 according to the first and the second embodiments and the communication processor 708 of the mobile terminal 300 according to the third embodiment inquire of the shared server 100 whether new programmed recording, a new play list, or information of a new content is registered in the program list of the user being followed. If new programmed recording, a new play list, or information of a new content is registered, the communication processors 708 and 1608 of the recording and reproducing apparatus 200 and the communication processor 708 of the mobile terminal 300 receive the new programmed recording, the new play list, or the information of the new content from the shared server 100. However, the communication processors 708 and 1608 of the recording and reproducing apparatus 200 and the communication processor 708 of the mobile terminal 300 do not necessarily make such an inquiry to receive new programmed recording, a new play list, or information of a new content.

The communication module 103 of the shared server 100 may be configured such that the shared server 100 transmits new programmed recording, a new play list, or a new content to the recording and reproducing apparatus 200 and the mobile terminal 300 at a predetermined timing without receiving an inquiry from the recording and reproducing apparatus 200 or the mobile terminal 300, for example. Furthermore, the communication processors 708 and 1608 of the recording and reproducing apparatus 200 and the mobile terminal 300 may be configured so as to receive the new programmed recording, the new play list, or the information of the new content.

- The shared server 100 according to the first to the third embodiments has a hardware configuration of a typical computer comprising a storage device, such as a CPU, a ROM, a RAM, and a flash memory, an external storage device, such as an HDD and a DVD, a display device, such as a display device, and an input device, such as a keyboard and a mouse, for example.

A program list sharing processing program executed in the recording and reproducing apparatus 200 according to the first to the third embodiments is provided in a manner incorporated in a ROM and the like in advance.

The program list sharing processing program executed in the recording and reproducing apparatus 200 according to the first to the third embodiments may be provided in a manner recorded in a computer-readable recording medium, such as a compact disk read-only memory (CD-ROM), a flexible disk (FD), a compact disk recordable (CD-R), and a digital versatile disk (DVD), as a file in an installable or executable format.

The program list sharing processing program executed in the recording and reproducing apparatus 200 according to the first to the third embodiments may be provided in a manner stored in a computer connected to a network such as the Internet to be made available for downloads via the network. Furthermore, the program list sharing processing program executed in the recording and reproducing apparatus 200 according to the first to the third embodiments may be provided or distributed over a network such as the Internet.

The program list sharing processing program executed in the recording and reproducing apparatus 200 according to the first to the third embodiments has a module configuration comprising each module described above (the program list generator 701, the programming manager 702, the play list manager 703, the content manager 1604, the program list search module 704, the requesting module 705, the screen display controller 709, the recording controller 706, the reproduction controller 707, and the communication processors 708 and 1608). In actual hardware, the CPU reads and executes the program list sharing processing program from the ROM described above to load each module on the main memory. Thus, the program list generator 701, the programming manager 702, the play list manager 703, the content manager 1604, the program list search module 704, the requesting module 705, the screen display controller 709, the recording controller 706, the reproduction controller 707, and the communication processors 708 and 1608 are generated on the main memory.

A program list sharing processing program executed in the mobile terminal 300 according to the third embodiment is provided in a manner incorporated in a ROM and the like in advance.

The program list sharing processing program executed in the mobile terminal 300 according to the third embodiment may be provided in a manner recorded in a computer-readable recording medium, such as a CD-ROM, an FD, a CD-R, and a DVD, as a file in an installable or executable format.

The program list sharing processing program executed in the mobile terminal 300 according to the third embodiment may be provided in a manner stored in a computer connected to a network such as the Internet to be made available for downloads via the network. Furthermore, the program list sharing processing program executed in the mobile terminal 300 according to the third embodiment may be provided or distributed over a network such as the Internet.

The program list sharing processing program executed in the mobile terminal 300 according to the third embodiment has a module configuration comprising each module described above (the program list generator 701, the programming manager 702, the play list manager 703, the content manager 1604, the program list search module 704, the requesting module 705, the screen display controller 709, and the communication processor 1608) . In actual hardware, the CPU reads and executes the program list sharing processing program from the ROM described above to load each module on the main memory. Thus, the program list generator 701, the programming manager 702, the play list manager 703, the content manager 1604, the program list search module 704, the requesting module 705, the screen display controller 709, and the communication processors 1608 are generated on the main memory.

A sharing processing program executed in the shared server 100 according to the first to the third embodiments is provided in a manner recorded in a computer-readable recording medium, such as a CD-ROM, an FD, a CD-R, and a DVD, as a file in an installable or executable format.

The sharing processing program executed in the shared server 100 according to the first to the third embodiments may be provided in a manner stored in a computer connected to a network such as the Internet to be made available for downloads via the network. Furthermore, the sharing processing program executed in the shared server 100 according to the first to the third embodiments may be provided or distributed over a network such as the Internet.

The sharing processing program executed in the shared server 100 according to the first to the third embodiments may be provided in a manner incorporated in a ROM and the like in advance.

The sharing processing program executed in the shared server 100 according to the first to the third embodiments has a module configuration comprising each module described above (the list manager 101 and the sharing manager 102). In actual hardware, the CPU reads and executes the sharing processing program from the recording medium described above to load each module on the main memory. Thus, the list manager 101 and the sharing manager 102 are generated on the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A recording apparatus (200) comprising:
a programming manager (702) configured to set up programmed recording of a program to be broadcast in response to an instruction from a user to register information of the program for which the programmed recording is set up in a program list; and
a transmitter (708, 1608) configured to transmit the program list to a server (100) that makes the program list shared with another user to transmit, when the programmed recording is set up, information of the program for which the programmed recording is set up to the server (100).

2. The recording apparatus (200) of Claim 1, further comprising:
a play list manager (703) configured to register a play list in which a plurality of programs to be viewed continuously are registered in the program list in response to an instruction from the user, wherein
the transmitter (708, 1608) is configured to further transmit, when the play list is registered in the program list, the play list to the server (100).

3. The recording apparatus (200) of Claim 1 or 2, further comprising:
a content manager (1604) configured to register information related to a video website in the program list in response to an instruction from the user, wherein
the transmitter (1608) is configured to further transmit, when the information related to the video website is registered in the program list, the information related to the video website to the server (100).

4. The recording apparatus (200) of Claim 3, wherein
the content manager (1604) is configured to further register information related to an introduction website of a content stored in a storage medium in the program list in response to an instruction from the user, and
the transmitter (1608) is configured to further transmit, when the information related to the introduction website of the content is registered in the program list, the information related to the introduction website of the content to the server (100).

5. A recording apparatus (200) comprising:
a search module (704) configured to search for a program list of a desired user from a server (100) configured to store therein the program list in which information of a program for which programmed recording is set up is registered and a user who creates the program list in a manner associated with each other;
a requesting module (705) configured to make a request for sharing of the program list of the desired user who is searched for to the server (100) to receive the program list of the desired user requested; and
a receiver (708, 1708) configured to receive, when new programmed recording is registered in the program list of the desired user, information related to a program for which the new programmed recording is set up from the server (100).

6. The recording apparatus (200) of Claim 5, wherein
the program list is configured to be able to register therein a play list in which a plurality of programs to be viewed continuously are registered, and
the receiver (708, 1708) is configured to further receive, when a new play list is registered in the program list of the desired user, the new play list from the server (100).

7. The recording apparatus (200) of Claim 5 or 6, wherein
the program list is configured to be able to register therein information related to a video website, and
the receiver (1608) is configured to further receive, when information related to a new video website is registered in the program list of the desired user, the information related to the new video website from the server (100).

8. The recording apparatus (200) of Claim 7, wherein
the program list is configured to be able to register therein information related to an introduction website of a content stored in a storage medium, and
the receiver (1608) is configured to further receive, when information related to an introduction website of a new content is registered in the program list of the desired user, the information related to the introduction website of the new content from the server (100).

9. A sharing processing method comprising:
searching for a program list of a desired user from a server (100) configured to store therein the program list in which information of a program for which programmed recording is set up is registered and a user who creates the program list in a manner associated with each other;
making a request for sharing of the program list of the desired user who is searched for to the server (100) to receive the program list of the desired user requested; and
receiving, when new programmed recording is registered in the program list of the desired user, information related to a program for which the new programmed recording is set up from the server (100).

10. A computer program product having a non-transitory computer readable medium including programmed instructions, wherein the instructions, when executed by a computer, cause the computer to perform:
searching for a program list of a desired user from a server (100) configured to store therein the program list in which information of a program for which programmed recording is set up is registered and a user who creates the program list in a manner associated with each other;
making a request for sharing of the program list of the desired user who is searched for to the server (100) to receive the program list of the desired user requested;
receiving, when new programmed recording is registered in the program list of the desired user, information related to a program for which the new programmed recording is set up from the server (100);
registering the information related to the program for which the new programmed recording is set up in the program list; and
transmitting the program list in which the information related to the program for which the new programmed recording is set up to a recording apparatus (200).
